**Europäisches Patentamt**

**European Patent Office**

**Office européen des brevets**

(19)

(11) Veröffentlichungsnummer: **0 017 652**
A1

## EUROPÄISCHE PATENTANMELDUNG

(12)

(21) Anmeldenummer: **79101142.2**

(22) Anmeldetag: **12.04.79**

(51) Int. Cl.³: **B 07 C 5/346**, G 06 K 7/10, G 06 K 1/12, B 61 L 3/06, G 01 N 23/221

(43) Veröffentlichungstag der Anmeldung: **29.10.80** **Patentblatt 80/22**

(84) Benannte Vertragsstaaten: **BE CH DE FR GB LU NL SE**

(71) Anmelder: **Központi Bányászati Fejlesztési Intézet, Varsányi Irén u. 40-44., H-1027 Budapest (HU)**

(72) Erfinder: **Adam, Laszlo, Dipl.-Ing.Chem., Bajvivo u.8, H-1027 Budapest (HU)**
Erfinder: **Fojt, Lajos, Dipl.-Phys., Kilián körtér 19, H-2800 Tatabánya 5 (HU)**
Erfinder: **Kirschner, Jozsef Kirschner, Dipl.-Elektroing., Kilián körtér 21, H-2800 Tatabánya 5 (HU)**
Erfinder: **Martos, Ferenc, Dr.Dipl.-Ing., Szarka u.1, H-1056 Budapest (HU)**
Erfinder: **Németh, Laszlo, Dipl.-Ing.Chem, Töhötöm vezér u.2, H-2800 Tatabánya 5 (HU)**
Erfinder: **Szücs, Zoltán, Dipl.-Ing.Chem., Frankel Leo ut.53., H-1023 Budapest (HU)**

(74) Vertreter: **Viering, Hans-Martin, Dipl.-Ing. et al, Patentanwälte Viering & Jentschura Steinsdorfstrasse 6, D-8000 München 22 (DE)**

(54) Verfahren zum Nachweisen eines Gegenstandes mit Hilfe radioaktiver Strahlung.

(57) Die Erfindung betrifft ein Verfahren zum Nachweisen eines Gegenstandes mit Hilfe radioaktiver Strahlung, bei welchem der Gegenstand mit einem zu radioaktiver Strahlung aktivierbaren Nuklid markiert wird und die Strahlung, die durch das aktivierte Nuklid auf dem Zielgegenstand hervorgerufen wird, mit einem Detektor abgetastet wird. Zur Markierung des Zielgegenstandes wird ein Nuklid verwendet, dessen instabiles Isotop nach der Aktivierung eine Halbwertzeit hat, die kürzer als hundert Sekunden ist. Zweckmäßig werden durch Neutronenbestrahlung zu einer Gammastrahlung anregbare Nuklide verwendet, insbesondere wenigstens ein Nuklidmaterial aus der Gruppe Sc, In, Hf, Dy, Ag, Se, Rh, Co und V. Durch das Verfahren gemäß der Erfindung können Zielgegenstände beliebig lang markiert werden, und zwar ohne daß die Anwendung von Nukliden mit extrem langer Halbwertszeit notwendig wäre. Die erfindungsgemäß verwendeten Nuklide sind stabil und werden unmittelbar vor der Abtastung des Gegenstandes aktiviert, und zwar binnen einer sehr kurzen Zeit. Nach der unmittelbar anschließenden Abtastung verlieren sie ihren Aktivierzustand. Die zur Markierung verwendeten Nuklide können auch beliebige Zeit später so oft wie erwünscht aktiviert und daher erkannt werden.

## Verfahren zum Nachweisen eines Gegenstandes mit Hilfe radioaktiver Strahlung

Die Erfindung bezieht sich auf ein Verfahren zum Nachweisen eines Gegenstandes mit Hilfe radioaktiver Strahlung, die mit einem Detektor abgetastet wird.

Zur radioaktiven Markierung von Gegenständen und zum Nachweisen der Markierung durch Beobachtung mit Strahlungsdetektoren sind schon verschiedene Verfahren bekanntgeworden. Der Zweck der Markierung und die markierten Gegenstände können sehr verschiedenartig sein (der Begriff "Gegenstand" wird hier und im weiteren im allgemeinen Sinne verwendet. So kann der Gegenstand z.B. ein Material beliebiger Konsistenz, oder ein beliebiger natürlicher oder künstlicher Gegenstand sein).

Das Markieren kann beispielsweise zur Spurverfolgung von chemischen Vorgängen, zur Kontrolle von biologischen Erscheinungen und zur Identifizierung von verschiedenen Gegenständen (z.B. von Dokumenten, Wertstücken, Waffen und dergleichen) ausgenutzt werden.

Es ist wohl bekannt, daß man bei einer Bestrahlung mit Neutronen, die auf die thermische kinetische Energie abgebremst sind, bei dem größten Teil von natürlichen und künstlichen Atomarten (Nukliden) eine beträchtliche radioaktive Strahlung auslösen kann, indem man die Massenzahl der einzelnen Isotopen dadurch erhöht, daß das thermische Neutron eingefangen wird, weil durch die Zunahme der Massenzahl der Atomkern instabil und radioaktiv wird.

Aufgrund dieser Erscheinung wird die sogenannte indirekte radioaktive Nachweismethode vorgenommen, bei welcher die Gegenstände, welche durch thermische Neutronen zu radioaktiver Strahlung anregbare Atomarten (Nuklide) enthalten, einer thermischen Neutronenbestrahlung ausgesetzt werden, wonach die radioaktive Strahlung des erregten Atomkernes mit einem Detektor nachgewiesen wird. Bei diesem und bei anderen an sich bekannten Verfahren verwendet man Radionuklide mit langer Halbwertszeit (wenigstens einige Stunden) in Abhängigkeit davon, wie lange der Gegenstand nach seiner Markierung beobachtbar sein muß. Die Beobachtbarkeit ist natürlich zeitlich beschränkt, weil die radioaktiven Isotope zerfallen und ihre Strahlung im Laufe der Zeit derart absinkt, daß sie entweder überhaupt nicht mehr oder nur durch sehr teuere besondere Einrichtungen noch nachgewiesen werden kann. Es gibt zwar Radioisotope mit ziemlich langer Halbwertszeit (in der Größenordnung von Jahren), die aber für Nachweiszwecke aus Gründen des Strahlungsschutzes nicht zulässig sind.

Ziel der Erfindung ist es, die Mängel der an sich bekannten, mit radioaktiver Strahlung arbeitenden Nachweisungsverfahren zu beseitigen, so daß der nachzuweisende Gegenstand zeitlich unbegrenzt nachgewiesen werden kann, ohne daß man Radionuklide mit einer außerordentlich langen Halbwertszeit verwenden müßte.

Die Erfindung beruht auf der Erkenntnis, daß der nachzuweisende Gegenstand nicht dauernd strahlen muß, sondern nur während der Beobachtung zu strahlen braucht, so daß die Anwendung solcher Markierungsnuklide völlig ausreicht, die zwar ständig am nachzuweisenden Gegenstand angeordnet sind, für welche jedoch die Strahlung nur auf Einwirkung einer Aktivierung, und nach der Aktivierung nur solange erfolgt, bis die Beobachtung durchgeführt ist. Diese Zeit kann sehr kurz sein (einige Sekunden oder eventuell noch kürzer), wenn der Aktivator und der Detektor hinreichend nahe beieinander angeordnet sind und wenn der markierte Zielgegenstand relativ zu dem Aktivator bzw. Detektor hinreichend schnell bewegt wird. Auf diese Weise können für das Nachweisen von Zielgegenständen bisher als ungeeignet angesehene Radionuklide mit kurzer Halbwertszeit verwendet werden.

Die auf der vorstehend angegebenen Erkenntnis aufbauende Erfindung ist ein Nachweisverfahren, bei welchem ein mit stabilen Nukliden, die zu radioaktiver Strahlung angeregt werden sollen, markierter Gegenstand der Aktivierungsenergie ausgesetzt wird, wonach die Strahlung der aktivierten Radionuklide mit einem Detektor abgetastet wird, und bei welchem solche stabilen Nuklide zur Markierung verwendet werden, deren aktivierten Isotope eine Halbwertszeit von weniger als hundert Sekunden haben.

Bei einer vorteilhaften Ausgestaltung des Verfahrens gemäß der Erfindung werden zur Markierung des Zielgegenstandes solche Nuklide verwendet, die durch Bestrahlung mit thermischen Neutronen aktivierbar sind.

Nach einer weiteren vorteilhaften Verfahrensvariante der Erfindung wird zur Markierung des Zielegegenstandes ein Nuklid verwendet, welches durch Bestrahlung mit thermischen Neutronen zu einer Gammastrahlung anregbar ist.

Bei einer anderen vorteilhaften Verfahrensvariante der Erfindung wird zur Markierung des Zielgegenstandes ein Nuklid verwendet, welches in einer Menge von einem Gramm nach einer Aktivierung durch Bestrahlung mit thermischen Neutronen mit einem Neutronenfluß von

$10^6$ n/s.cm² während einer Sekunde wenigstens ein Gammaphoton pro Sekunde abstrahlt.

In manchen Fällen kann es vorteilhaft sein, wenn zur Markierung des Zielgegenstandes wenigstens zwei unterschiedliche Nuklidtypen verwendet werden, wobei durch einzelne Kombinationen der unterschiedlichen Nuklidtypen bestimmte diskrete Informationsinhalte mitgeteilt werden können, die während der Strahlungsabtastung ausgelesen werden können.

Vorzugsweise wird zur Markierung des Zielgegenstandes wenigstens einer der folgenden Nuklidtypen angewendet: Sc, In, Hf, Dy, Ag, Se, Rh, Co und V.

Durch die Erfindung wird erreicht, daß erfindungsgemäß markierte Zielgegenstände beliebig lange nachgewiesen werden können, weil das in der Markierung auf dem Zielgegenstand verwendete Nuklid selbst stabil ist (es strahlt nur durch besondere Aktivierung) und zu geeigneten Zeitpunkten so oft wie notwendig aktiviert werden kann. Diese Möglichkeit kann am vorteilhaftesten für die Mar-kierung von Schriftstücken, Wertgegenständen, Kunst-schätzen und dergleichen ausgenutzt werden. Das zur Markierung verwendete Nuklid kann in einer sehr geringen Menge auf den Zielgegenstand aufgetragen werden (z.B. in einer Farbe, einem Lack oder Tinte vermischt oder in das Material eines Papiermaterials, Textilstoffes und dergleichen einbezogen werden). Die Markierung ist für einen Außenstehenden völlig verborgen und kann auch mit Hilfe eines Strahlungsdetektors nicht nachgewiesen werden, sei es, weil sie nicht aktiviert wurde oder - falls sie bereits aktiviert wurde - der Aktivierungszustand nach sehr kurzer Zeit wieder verschwunden ist. In dem gewünschten Zeitpunkt jedoch kann der Zielgegenstand zweifelsfrei identifiziert werden, wenn das aktivierbare Nuklid aktiviert ist und gleichzeitig auf Strahlung abgetastet wird. Aus der Aktivität und dem Energieniveau der abgetasteten Strahlung kann eindeutig festgestellt werden, ob das Zielobjekt die richtige Art und Menge von Nukliden enthält, d.h. ob es sich um den gesuchten Gegenstand handelt.

Ein wesentlicher Vorteil des Verfahrens gemäß der Erfindung liegt darin, daß die Aktivierung und Abtastung in sehr kurzer Zeit durchführbar sind. So kann beispielsweise zur Kontrolle chemischer Prozesse an einer gegebenen Stelle eine Information über den Prozess innerhalb einer sehr kurzen Zeit erhalten werden, so daß gegebenenfalls unmittelbar eingegriffen werden kann, um den Prozess günstig zu beeinflussen.

Ein weiterer Vorteil liegt darin, daß der Zielgegenstand nicht aus dem System herausgenommen zu werden braucht und daß die Untersuchung zerstörungsfrei durchführbar ist. So können in der beschriebenen Weise Gegenstände, die unsichtbar mit solchen Nukliden markiert sind (z.B. Kunstschätze, Münzen, Dokumente und dergleichen) in geschlossenen Paketen, selbst Koffern, ohne Aufsehen schnell entdeckt werden.

Ein wichtiger weiterer Vorteil der Erfindung liegt darin, daß die Markierungssubstanz absolut versteckt ist und nicht von Gefahr ist, weil die Nuklide nur nach ihrer Aktivierung und für einen sehr kurzen Zeitraum strahlen.

Als einer der wichtigsten Vorteile der Erfindung kann angesehen werden, daß von den verwendeten Nukliden eine nur ganz geringe Menge zum Nachweisen erforderlich ist. Im Falle der Verwendung Sc, In, Hf und Dy ist die zum Nachweis erforderliche Minimalmenge bei einer Bestrahlung binnen einer Zeitdauer von 1 s mit $10^6$ n/s.cm² nur 2-10 g, und im Falle der Anwendung von Ag, Se, Rh, Co und V ist die erforderliche Menge 30-100 g, vorausgesetzt, daß die Aktivitätsmessung ebenfalls 1 s lang dauert, d.h. der Zielgegenstand für diesen Zeitraum sich vor dem Detektor befindet, was gegebenenfalls derart erreicht werden kann, daß der Detektor mit derselben Geschwindigkeit vor dem Zielgegenstand bewegt wird, oder z.B. der Zielgegenstand, auf welchen das kennzeichnende Nuklid in Form eines Streifens von 1 m aufgetragen ist, vor dem stehenden Detektor mit einer Geschwindigkeit von 1 m/s bewegt wird.

Es ist auch möglich, daß an dem Zielgegenstand mehrere unterschiedliche Nuklidarten verwendet werden und diese mittels eines mehrkanäligen Detektors einzeln erfaßt werden. In dieser Weise kann man z.B. bei Verwendung von drei unterschiedlichen Markierungsnukliden sieben unterschiedliche Markierungsinformationen unterscheiden. Im Falle von stillstehenden Zielgegenständen ist es am einfachsten, so vorzugehen, daß die aktivierende Strahlungsquelle und der Detektor mit entsprechender Geschwindigkeit in gegebener Entfernung vom Zielgegenstand an diesem vorbeigeführt werden.

Durch die Erfindung ist es unter anderem auch möglich, markierte Zielgegenstände zu suchen und zu finden, beispielsweise im Bergbau verwendete und bei der Zündung nicht explodierte und daher gefährliche Zündkapseln zu finden, um sie unschädlich zu machen.

Die Erfindung wird anhand einiger Ausführungsbeispiele näher erläutert:

Beispiel 1:

Bei Schießarbeiten im Bergbau oder bei anderen Sprengschüssen wird auf den Metallmantel der Zündkapsel vor deren Verwendung ein 2g In-haltiger Metallring aufgezogen. Nach der Sprengung wird das ganze Sprenggebiet, in welchem durch technische Fehler nicht gesprengte Zündkapseln vorhanden sein können, mit einer Cf-252 Neutronen-quelle von $10^8$ n/s derart bestrahlt, daß die Neutronenquelle von der Oberfläche (dem Gestein) in einem Abstand von 10 cm z.B. von außen nach innen, entlang einer Spriallinie oder einer Meanderlinie hin und her bewegt wird, d.h. die ganze Fläche des Gebietes bestrahlt wird, während ein Strahlendetektor (z.B. GM-Strahlendetektoren) über dieselbe Linienbahn geführt wird, so daß die Strahlung, die durch die Einwirkung der Neutronenbestrahlung des an der Manteloberfläche einer nicht gesprengten Zündkapsel befindlichen In aktiviert wird, festgestellt wird. Die Teile der gesprengten Zündkapseln hingegen sind derart weit zerstreut, daß die von ihnen aufgrund der Aktivierung abgegebene Strahlung um Größenordnungen kleiner ist als diejenige Strahlung, die durch nicht gesprengte, als Ganzes verbliebene Zündkapseln hervorgerufen wird. Die Aktivierungsbestrahlung und die Abtastung können zweckmäßig in einem einzigen Schritt vorgenommen werden, indem die Neutronenquelle und der Detektor auf einen gemeinsamen Rahmen montiert werden. Dabei sind in Bewegungsrichtung vorne die Strahlungsquelle und hinten der Detektor angeordnet. Die Bewegungsgeschwindigkeit wird derart gewählt, daß die eventuell nicht gesprengten Zündkapseln wenigstens eine Sekunde lang der Neutronenbestrahlung ausgesetzt werden und daß der Detektor wenigstens eine Sekunde lang derjenigen Strahlung ausgesetzt wird, die durch die Aktivierung der Markierung an der Zündkapsel abgegeben wird.

Beispiel 2:

Ein Kunstschatz (Gemälde oder ein Kleinod und dergleichen) wird mit einer Korrosionsschutz- und Konservierungsschicht belegt, die 0,1 g/cm² Sc enthält. Natürlich ist diese Schicht bei einem Gemälde zweckmäßig auf der Rückseite aufgetragen. Der Kunstschatz (Zielgegenstand) wird auf ein Förderband gesetzt, welches mit einer Geschwindigkeit von 1 m/s sich bewegt. Dieser Kunstschatz kann gegebenenfalls in einem Paket oder Koffer versteckt sein. Neben dem Förderband wird eine von der Umgebung entsprechend abgeschirmte Cf-252 Neutronenquelle derart angeordnet, daß der sich auf dem Förderband bewegende Zielgegenstand einem Fluß thermischer Neutronen von wenigstens $10^6$ n/s.cm² ausgesetzt wird. In Förderrichtung hinter der Neutronenquelle ist in einer Entfernung von 2 bis 4 m ein Strahlendetektor (z.B. ein einfacher GM-Detektor) angeordnet, mit dem festgestellt wird, daß der markierte Kunstschatz gefördert wird (es wird die Strahlung festgestellt, welche das erregte Sc aussendet). Auf diese Weise kann das Schmuggeln eines wertvollen Kunstschatzes verhindert werden, ohne daß die Passagiere an der Kontrollstelle (Paß- und Zollkontrolle) belästigt werden bzw. ohne daß der Täter Verdacht schöpft (weil die Überprüfung völlig versteckt erfolgt).

Beispiel 3:

Auf einem Rangierbahnhof wird vor dem Rangieren der Waggons an jedem Waggon des Zuges eine Tafel mit einer Fläche von 0,5 m² lösbar angebracht. Unter der Annahme, daß sieben verschiedene Züge zusammengestellt werden sollen, werden sieben Tafeln vorbereitet, auf welchen die folgenden Markierungsmaterialien aufgetragen sind:

| Tafel Nr. 1 | 20g Sc |
|---|---|
| Tafel Nr. 2 | 40g In |
| Tafel Nr. 3 | 80g Hf |
| Tafel Nr. 4 | 20g Sc + 40g In |
| Tafel Nr. 5 | 20g Sc + 80g Hf |
| Tafel Nr. 6 | 40g In + 80g Hf |
| Tafel Nr. 7 | 20g Sc + 40g In + 80g Hf. |

Entlang der Rangierstrecke wird in Höhe der an den Waggons angebrachten Tafeln eine Cf-252 Neutronenquelle der Stärke von $10^9$ n/s angeordnet und in Fahrtrichtung hinter der Neutronenquelle wird ein energieselektiver Detektor (z.B. ein Szintillations- oder Halbleiterdetektor) angeordnet. Die Strahlung des Sc-46m vom Energieniveau 0,1425 MeV, die Strahlung des In-116m$_2$ mit 0,1640 MeV und die Strahlung des Hf-179m mit 0,2155 MeV können mit einem energieselektiven Detektor je einzeln festgestellt werden. Auf diese Weise kann die Tafel des eben vorbeifahrenden Waggons identifiziert werden, so daß leicht festgestellt werden kann, auf welches Gleis dieser Waggon gerichtet werden muß. In Abhängigkeit davon, ob von den angegebenen drei Markierungsmaterialien nur eines oder je zwei oder alle drei zusammen erscheinen, liefert der Detektor entsprechend sieben mögliche Ausgangssignale, die mittels einer an sich bekannten Dreikanal-Auswertungsanordnung ausgewertet werden können, wonach mit einer entsprechenden Steueranordnung die Weichen automatisch stets entsprechend dem vorbeifahrenden Waggon bzw. seiner Tafel gestellt werden können. Man braucht somit beim Rangieren der Waggons nur die Markierungstafeln anzubringen, während für das Rangieren selbst keine weiteren Eingriffe durch den Menschen notwendig sind.

Beispiel 4:

Durch eine Rohrleitung strömt Trübe mit einer Geschwindigkeit von 1 m/s. In der Rohrleitung sind eine Cf-252 Neutronenquelle mit einer Strahlungsstärke von $10^9$ n/s, und in Strömungsrichtung hinter der Neutronenquelle ein energieselektiver Strahlungsdetektor angeordnet. In die Trübe wird Markierungsmaterial eingemischt, das durch die Neutronenquelle aktiviert wird. Danach wird mit dem energieselektiven Detektor die abgegebene Strahlung, die aufgrund des aktivierten Markierungsmaterials abgegeben wird, festgestellt. In Abhängigkeit von dem festgestellten Energieniveau bzw. der Strahlungsintensität wird der technologische Vorgang im weiteren beeinflußt, so daß z. B. die Trübe in einen anderen Behälter, in eine andere Rohrleitung oder in eine andere Einrichtung gelangt, falls eine entsprechende Konzentration festgestellt wird. Mittels der Cf-252 Neutronenquelle mit einer Strahlungsintensität von $10^9$ n/s und des energieselektiven Detektors kann z.B. bereits eine Konzentration von 20 g Sc/t, 40 g In/t, 80 g Hf/t, 100 g Dy/t, je 350 g Ag und Se/t, 400 g Rh/t, je 500 g Co und V/t festgestellt werden und eine beliebige größere Konzentration bzw. eine höhere Anreichungszahl kann an der Steueranordnung eingestellt werden. Bei dieser Konzentration ist ein beliebiger automatischer Eingriff möglich. In einigen Fällen können natürlich die Markierungsmaterialien selbst die Anreicherungselemente sein.

Es ist ersichtlich, daß über die vorstehend angegebenen Beispiele hinaus noch zahlreiche andere Ausführungsbeispiele vorliegen.

## Patentansprüche

1. Verfahren zum Nachweisen eines Gegenstandes mit Hilfe radioaktiver Strahlung, bei welchem dieser mit zu radioaktiver Strahlung fähigen Nukliden markiert wird und mit einem auf die Strahlung ansprechenden Detektor abgetastet wird, dadurch gekennzeichnet, daß der Gegenstand mit solchen erst durch äußere Energie aktivierbaren Nukliden markiert wird, deren instabiles Isotop eine Halbwertszeit von weniger als hundert Sekunden hat, und daß der Gegenstand erst unmittelbar vor und/oder während seiner Abtastung der Aktivierungsenergie ausgesetzt wird.

2. Verfahren nach Anspruch 1, dadurch gekennzeichnet, daß der Gegenstand mit durch Neutronenbestrahlung aktivierbaren Nukliden markiert wird.

3. Verfahren nach Anspruch 2, dadurch gekennzeichnet, daß der Gegenstand mit durch Bestrahlung mit thermischen Neutronen zu einer Gammastrahlung anregbaren Nukliden markiert wird.

4. Verfahren nach Anspruch 3, dadurch gekennzeichnet, daß Markierungsnuklide verwendet werden, welche nach einer eine Sekunde dauernden Bestrahlung mit thermischen Neutronen mit einem Neutronenfluß von $10^6$ n/s cm² wenigstens ein Gammaphoton pro Sekunde abstrahlt.

0017652

5. Verfahren nach einem der Ansprüche 1 bis 4, dadurch gekennzeichnet, daß der Gegenstand mit wenigstens zwei unterschiedlichen Nuklidarten markiert wird.

6. Verfahren nach Anspruch 5, dadurch gekennzeichnet, daß durch einzelne Kombinationen der unterschiedlichen Nuklidarten, mit denen der Gegenstand markiert wird, diesem ein bestimmter Informationsinhalt mitgeteilt wird, der bei der Abtastung ausgelesen wird.

7. Verfahren nach einem der Ansprüche 1 bis 6, dadurch gekennzeichnet, daß der Gegenstand mit wenigstens einem der folgenden Nuklidtypen markiert wird: Sc, In, Hf, Dy, Ag, Se, Rh, Co und V.

### Europäisches Patentamt
### EUROPÄISCHER RECHERCHENBERICHT

Nummer der Anmeldung 0017652

EP 79 10 1142

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 818 226 (O.M. STRINDEHAG)<br><br>* Zusammenfassung; Spalte 1, Zeilen 5-9,23-42; Spalte 2, Zeilen 43-65 Spalte 3, Zeilen 2-16; Figuren *<br><br>-- | 1-7 |
| X | FR - A - 1 137 376 (KORTING RADIO-WERKE GmbH)<br><br>* Seite 1, linke Spalte, Zeilen 25-30; Seite 2, linke Spalte, Zeile 52 bis rechte Spalte, Zeile 10; Seite 2, rechte Spalte, Zeilen 25-47; Seite 3, linke Spalte, Zeilen 13-19; rechte Spalte, Zeilen 29-31,40-49; Figuren 1,2 *<br><br>-- | 1-3,7 |
| | US - A - 2 957 079 (R.G. EDHOLM)<br>* Spalte 1, Zeilen 15-18; Spalte 3, Zeile 34 bis Spalte 4, Zeile 5; Spalte 4, Zeilen 48-60; Spalte 5, Zeilen 1-31; Figur 1 *<br><br>-- | 1,5,6 |
| | FR - A - 1 125 706 (NEDERLANDSE BOEKHOUD EN STATISTIEKMACHINE MAATSCHAPPIJ BULLATEC NV)<br><br>* Seite 1, linke Spalte, Zeilen 1-9; Seite 2, linke Spalte, Zeilen 15-24; linke Spalte, Zeile 54 bis rechte Spalte, Zeile 41; Figuren 3-6 *<br><br>-- | 1,5,6 |
| | US - A - 4 136 778 (J.J. WORTMAN et al.)<br><br>./. | 1,5,6 |

**KLASSIFIKATION DER ANMELDUNG (Int.Cl. 3)**

B 07 C 5/346
G 06 K 7/10
      1/12
B 61 L 3/06
G 01 N 23/221

**RECHERCHIERTE SACHGEBIETE (Int. Cl. 3)**

G 01 V 5/00
B 07 C 5/34
G 06 K 7/10
      19/06
      1/12
B 07 C 3/14
G 06 K 19/08
      1/12
G 21 H 5/00
G 01 N 23/221
      23/00
      23/14
B 61 L 3/06

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-12-1979 | VILLEMIN |

EPA form 1503.1 06.78

| | EINSCHLÄGIGE DOKUMENTE | | | KLASSIFIKATION DER ANMELDUNG (Int.Cl. 3) |
|---|---|---|---|---|
| Kategorie | Kennzeichnung des Dokuments mit Angabe, soweit erforderlich, der maßgeblichen Teile | betrifft Anspruch | | |
| | * Zusammenfassung; Spalte 1, Zeilen 11-13; Spalte 2, Zeilen 35-47; Spalte 2, Zeile 67 bis Spalte 3, Zeile 9; Spalte 3, Zeile 58 bis Spalte 4, Zeile 36; Figuren 1-3 *<br><br>-- | | | |
| | FR - A - 1 388 936 (CENTRE NATIONAL D'ETUDES DES TELECOMMUNICATIONS)<br><br>* Seite 1, linke Spalte, Zeilen 1-11; Seite 3, linke Spalte, Zeilen 18-32; Seite 4, linke Spalte, Zeilen 26-45; Figur 2 *<br><br>-- | 1,5,6 | | RECHERCHIERTE SACHGEBIETE (Int. Cl. 3) |
| | FR - A - 1 382 345 (COMPAGNIE FRANCAISE THOMSON-HOUSTON)<br><br>* Seite 1, linke Spalte, Zeilen 1-7; Seite 2, rechte Spalte, Zeilen 46-54; Seite 7, linke Spalte, Zeilen 7-46; Figur 5 *<br><br>-- | 1,5,6 | | |
| | JOURNAL OF RADIOANALYTICAL CHEMIS-TRY, Vol. 26, 1975, IRI-Rapport 133-75-02 Lausanne, CH, P. BODE et al.: "A study of short-lived isotopes for use in non-destructive activation analysis", Seiten 209-213<br><br>* Seite 209, Zusammenfassung und Einleitung; Tabelle; Seite 211<br><br>---- | 2-4,7 | | |